# FASCICULE DE BREVET EUROPEEN

(11) **EP 2 005 047 B1**
(45) Date de publication et mention de la délivrance du brevet: **21.12.2011**
(21) Numéro de dépôt: 07731298.1
(22) Date de dépôt: 13.04.2007
(51) Int. Cl.: F16K 31/06, F02M 63/02, F02M 63/00

(54) **ELECTROVANNE DE REGULATION DE PRESSION**
DRUCKREGELMAGNETVENTIL
PRESSURE-REGULATING SOLENOID VALVE

(30) Priorité: 13.04.2006 FR 0603376
(43) Date de publication de la demande: 24.12.2008
(73) Titulaire: BorgWarner, Inc., Auburn Hills, MI 48326 (US)
(72) Inventeur: ESCANDEL, Gillian, 06000 Nice (FR); GOUBELY, Aimé, 06340 La Trinité (FR); GANTELME, Pascal, 06110 Le Cannet (FR)
(74) Mandataire: Littolff, Denis
(86) Numéro de dépôt international: PCT/FR2007/000631
(87) Numéro de publication internationale: WO 2007/119007

(56) Documents cités:
- EP-A- 1 557 597
- DE-A1- 4 030 971
- DE-A1- 4 431 459
- DE-A1- 19 700 979

## Description

La présente invention concerne une électrovanne de régulation de pression comprenant classiquement un sous-ensemble électrique muni d'une bobine et sa culasse associé à un sous-ensemble hydraulique. Celui-ci comporte à titre principal un siège traversé par un conduit reliant deux circuits de fluide respectivement amont et aval, des moyens d'obturation dudit conduit, un poussoir coulissant dans une pièce polaire et qui actionne ces moyens d'obturation, et un noyau mobile solidaire du poussoir dont le déplacement est contrôlé par la bobine.

Ces pièces sont par exemple utilisées dans des systèmes d'injection directe de carburant pour moteurs thermiques du type à rail commun, dans lesquelles elles ont une fonction de contrôle de la pression d'injection : dès lors que celle-ci excède un seuil prédéterminé, du fluide est déchargé du rail et renvoyé vers le réservoir de carburant du véhicule. Elles sont en fait directement montées sur ledit rail commun, à l'intérieur duquel le carburant est porté à très haute pression à l'aide d'une pompe à haute pression, en vue d'alimenter les injecteurs du moteur.

Il s'agit en l'espèce d'une électrovanne ouverte au repos, c'est-à-dire que le poussoir et les moyens d'obturation ne sont pas plaqués contre le siège de la vanne à courant nul. L'ensemble noyau / poussoir est maintenu, par des moyens de rappel, à distance de la pièce polaire, créant un entrefer initial e₀ dont la largeur doit être maîtrisée pour assurer un fonctionnement correct aussi bien à bas débit qu'à haut débit.

Si cet entrefer e₀ est trop important, il ne se passe rien dans les faibles valeurs de courant, et il faut au contraire un courant élevé pour que le noyau se déplace à partir de sa position de repos vers une position de travail, position dans laquelle l'entrefer est sensiblement moins élevé. L'effort électromagnétique correspondant multiplie brusquement sa valeur par un facteur *n*, et la section de passage du fluide chute rapidement, provoquant une augmentation brutale de pression dans le circuit amont. Ladite pression passe soudainement par exemple de quelques bars à 1000 bars ou plus.

Afin d'éviter ce saut de pression, il faut que l'entrefer initial e₀ soit proche de la position de travail à l'équilibre de l'électrovanne. Dans cette hypothèse, les variations de section et d'effort sont limitées et le saut de pression reste faible. L'électrovanne commence en fait à répondre à des courants plus faibles.

Un réglage initial de l'entrefer, pour atteindre cet objectif, permet donc à titre principal d'assurer que l'effort de l'électroaimant soit maîtrisé, et il maintient en outre une dispersion minimale, à la fabrication, entre vannes.

Jusqu'ici, ce réglage était effectué en interposant une cale d'épaisseur variable sélectionnée entre le siège de l'électrovanne et la pièce polaire dans laquelle coulisse le poussoir. Dans une optique de process industriel, l'utilisation de cales à sélectionner individuellement, pour l'assemblage d'électrovannes selon des mesures faites au cours d'étapes précédentes, n'est cependant guère favorable notamment sous un angle économique.

Une autre solution, divulguée par le document DE 197 00 979, préconise un double réglage par variation de position d'un manchon polaire dans lequel coulisse le poussoir, et par déplacement à force d'un organe de réglage axial en déformant la paroi d'extrémité de l'électrovanne que ledit organe touche. Cette double action n'est cependant pas automatisable.

L'invention remédie à cet inconvénient, en proposant une configuration qui peut être réalisée intégralement en ligne lors de l'assemblage de l'électrovanne, et ne nécessite pas de pièce supplémentaire.

Selon l'invention, l'électrovanne de régulation de pression de l'invention, comprenant classiquement un sous-ensemble hydraulique comportant un siège traversé par un conduit reliant deux circuits de fluide, des moyens d'obturation dudit conduit, un poussoir coulissant dans une pièce polaire et actionnant lesdits moyens d'obturation, un noyau mobile solidaire du poussoir et dont le déplacement est contrôlé par la bobine, des moyens de rappel de l'ensemble noyau / poussoir en position ouverte à courant nul et un capuchon de fermeture du sous-ensemble hydraulique définissant avec ladite pièce polaire un espace clos dans lequel peut cou isser l'ensemble noyau / poussoir, se caractérise à titre principal en ce que le capuchon comporte un logement traversant débouchant dans l'espace de coulissement de l'ensemble noyau / poussoir, dans lequel est enfoncé un organe de réglage dépassant dudit logement de manière à constituer une butée axiale pour l'ensemble noyau / poussoir, la distance de dépassement de l'organe de réglage définissant seule la largeur de l'entrefer à courant nul et étant réglable par variation de la force d'enfoncement.

L'originalité de l'invention réside dans l'utilisation d'un organe dont la position est réglable en fonction de mesures faites au cours de l'assemblage de l'électrovanne, simplement en graduant l'effort d'enfoncement, c'est-à-dire en procédant à une opération facilement mise en oeuvre dans une optique d'automatisation de chaînes de montage.

De préférence, l'organe de réglage est une bille. La réalisation de l'automatisation de l'enfoncement d'une bille dans un logement, avec les différentes manipulations qu'elle implique, n'est en particulier guère problématique.

Plus précisément, selon l'invention, les moyens de rappel consistent en un ressort interposé entre le noyau et l'épaulement de fond d'un logement pratiqué, dans la pièce polaire, en périphérie de l'alésage permettant le passage du poussoir dans ladite pièce.

L'électrovanne de régulation étant à position ouverte à courant nul, il convient bien entendu que l'effort de rappel soit orienté en sens inverse du sens de fermeture de l'électrovanne. C'est la raison pour laquelle ce ressort est interposé entre la pièce polaire et le noyau, ménageant un entrefer variable selon l'intensité du courant de la bobine au cours du fonctionnement.

La présente invention concerne également un procédé de réglage à courant nul de la largeur de la distance entre le noyau et la pièce polaire, au cours de l'assemblage d'une électrovanne de régulation de pression telle que décrite ci-dessus comportant une bille de fermeture interposée entre l'extrémité du poussoir et le siège de l'électrovanne.

Selon l'invention, ce procédé se caractérise à titre essentiel par les étapes suivantes :
- introduction de la bille de fermeture dans le corps constitué de la pièce polaire solidarisée au siège, ledit corps étant orienté verticalement de telle sorte que la bille vienne au contact dudit siège par gravité ;
- mesure de la distance d₁ entre le haut de la bille et la face de la pièce polaire prévue pour être en regard du noyau mobile ;
- emmanchement du poussoir dans le noyau jusqu'à ce que la distance entre la face du noyau destinée à venir en regard de la pièce polaire et la zone de contact bille / poussoir soit égale à d₁ + e₁, e, étant un entrefer de travail prédéterminé ;
- introduction du ressort dans son logement périphérique à l'alésage de la pièce polaire, suivie de l'introduction de l'ensemble poussoir / noyau dans ledit alésage ;
- mesure de la distance d₂ entre la surface d'extrémité supérieure du poussoir et un épaulement périphérique externe de la pièce polaire pour le positionnement du capuchon de fermeture sur ladite pièce ;
- enfoncement de l'organe de réglage dans le logement du capuchon jusqu'à ce qu'à une distance d₄ mesurée entre le bord du capuchon, ou d'un tube qui lui est fixé, et l'extrémité libre de la bille atteigne une valeur correspondant à la somme de la distance d₂ et d'une levée initiale l₀ prédéterminée ;
- mise en place et soudage du capuchon.

La distance entre le noyau et la pièce polaire correspond en fait à la somme de deux valeurs que le procédé de l'invention permet de régler : un entrefer qui permet de diminuer la dispersion et de maîtriser l'effort, et une levée l₀ qui permet de rester proche de la zone de travail et diminue le saut à courant faible.

L'organe de réglage est à nouveau, de préférence, une bille. D'autres formes pourraient cependant tout aussi bien être utilisées.

L'ensemble des étapes du procédé sont automatisables, avec un gain de temps non négligeable puisqu'il n'est plus nécessaire d'introduire une pièce supplémentaire sélectionnée selon les résultats des mesures.

L'invention va à présent être décrite plus en détail, en référence aux figures annexées, pour lesquelles :
- la figure 1 représente une vue en coupe longitudinale d'une électrovanne selon l'invention ; et
- La figure 2 montre la même vue en coupe, avec indication des distances mesurées en vue de la mise en oeuvre du procédé de l'invention.

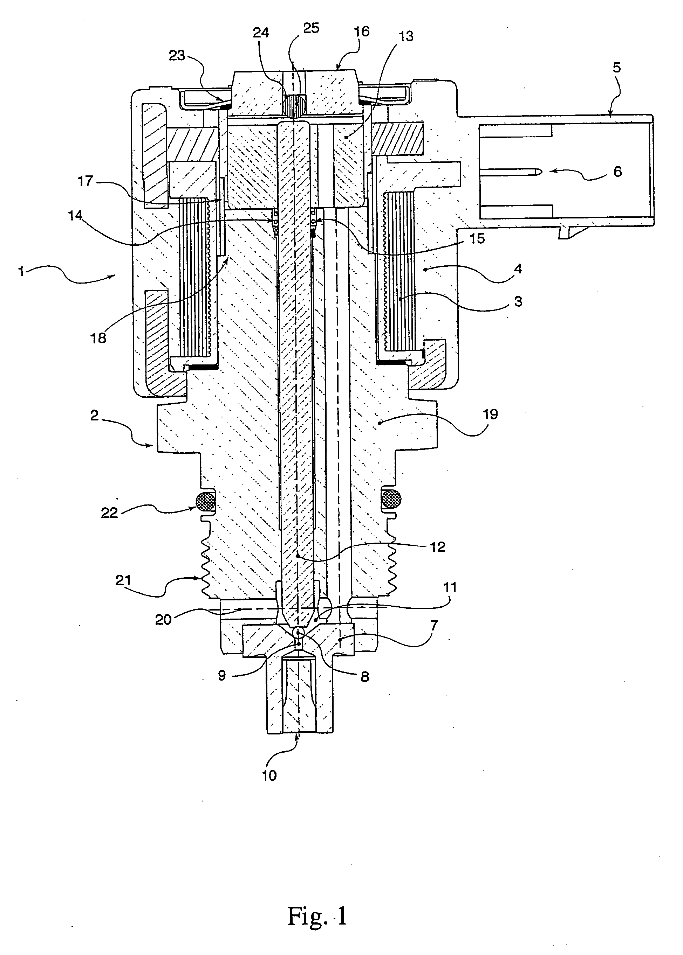

En référence à la figure 1, le sous-ensemble ou bloc électromagnétique est référencé (1), et le sous-ensemble ou bloc hydraulique est référencé (2). Le bloc électromagnétique (1) comporte à titre principal une bobine (3) enroulée autour d'une culasse magnétique (4), l'ensemble étant surmoulé. Un connecteur (5) permet le raccordement de l'électrovanne à l'aide des picots conducteurs (6).

Le bloc hydraulique (2) comprend un siège (7) pour une bille (8) permettant d'obturer un conduit (9) reliant la partie amont (10) du circuit hydraulique à une partie aval (11). La bille (8) est maintenue au contact du siège par un poussoir (12) solidarisé au noyau mobile (13) coulissant à l'intérieur du bloc hydraulique (2). Un ressort (14) permet d'exercer une force de rappel sur le noyau (13). Le ressort (14) s'appuie, outre sur le noyau mobile (13), sur un épaulement interne d'un logement (15) pratiqué à la périphérie de l'alésage d'une pièce polaire (19). Un capuchon (16) ferme le volume du bloc hydraulique (2) en association avec un tube cylindrique (17) auquel il est soudé, et dont l'autre extrémité est fixée (par exemple également par soudage) au niveau d'un épaulement externe (18) de la pièce polaire (19). C'est dans cette pièce polaire (19) que sont pratiqués les canaux d'évacuation (20) permettant de rejeter le fluide à destination du réservoir de carburant.

Le bloc hydraulique (2) est muni d'un filetage externe (21) permettant la fixation à un filetage interne prévu dans l'orifice de raccordement au rail commun. Un joint torique (22) assure l'étanchéité avec l'extérieur.

Une rondelle de blocage (23), par exemple en inox, assure la fixation axiale du bloc hydraulique (2) dans le bloc électromagnétique (1). Cette rondelle (23) est reliée à force sur le capuchon (16) par une liaison à arc-boutement de sa partie médiane, par exemple composée d'un certain nombre de languettes.

Le capuchon (16) comporte un logement (24) dans lequel est enfoncée une bille (25). Le logement (24) possède un orifice traversant le capuchon (16).

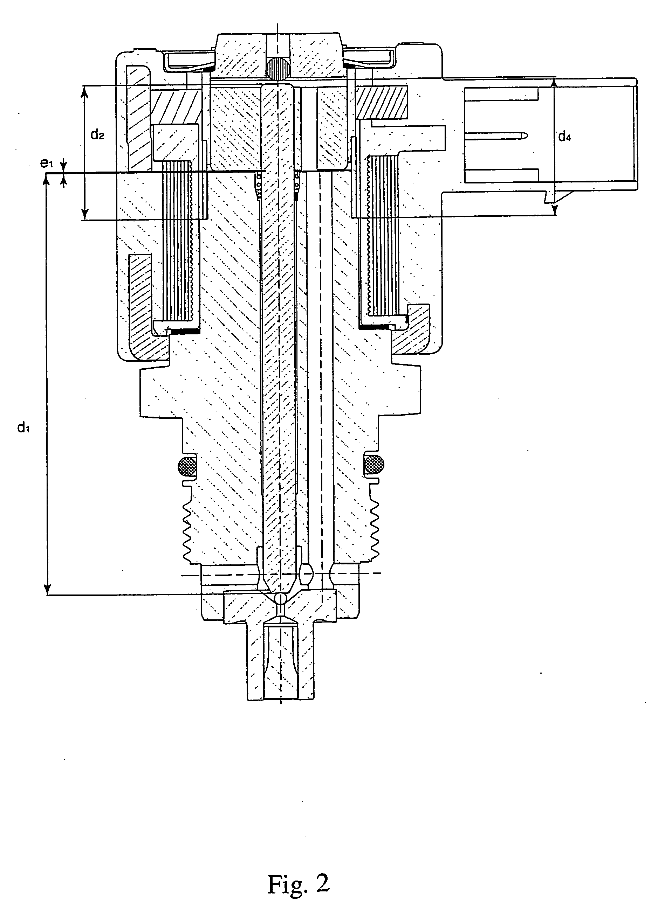

La figure 2 donne simplement les côtes et les longueurs permettant de comprendre la mise en oeuvre du procédé de montage de l'invention.

Au moment de l'assemblage, qui s'effectue dans l'orientation qui est montrée dans la figure, la bille (8) est déposée de telle sorte qu'elle repose par gravité au contact du siège (7), obstruant sans pression l'orifice (9). On procède alors à la mesure de la distance d₁ existant entre le haut de cette bille (8) et la surface supérieure de la pièce polaire (19). Au cours de l'emmanchement contrôlé du poussoir (12) dans le noyau (13), la distance entre la face du noyau (13) destinée à venir en regard de la pièce polaire (19) et la zone de contact bille (8) / poussoir (12), à l'extrémité de ce dernier, est mesurée de telle sorte qu'elle soit égale à d₁ plus une valeur e₁ qui est une valeur d'entrefer de travail choisie à l'avance.

Le ressort (14) est introduit dans son logement (15), puis l'ensemble poussoir (12) / noyau (13) est à son tour inséré dans l'alésage de la pièce polaire (19), jusqu'à venir en contact avec l'extrémité supérieure de la bille (8).

Il est alors procédé à la mesure de la distance d₂ séparant l'autre face du poussoir (13) et l'épaulement périphérique externe (18) de la pièce polaire (19).

La mesure de la distance d₄ séparant l'extrémité libre de la bille (25) et la bordure extérieure du tube (17) est ensuite effectuée.

L'enfoncement de l'organe de réglage, en l'occurrence la bille (25), dans le logement (24) s'effectue jusqu'à ce que la distance d₄ atteigne la somme de d₂ et de l₀, valeur de levée initiale répondant aux critères énoncés auparavant.

Lorsque c'est le cas, le capuchon (16) auquel a été soudé le tube (17) est enfoncé jusqu'à ce que le chant d'extrémité libre dudit tube (17) arrive au contact de l'épaulement (18) de la pièce polaire (19), auquel il est soudé.

L'invention ne se limite pas aux exemples illustrés par les figures précédentes, qui ne montrent en effet qu'un simple exemple de mise en oeuvre.

## Revendications

1. Electrovanne de régulation de pression comprenant un sous-ensemble électrique (1) muni d'une bobine (3) et sa culasse (4) associé à un sous-ensemble hydraulique (2) comportant un siège (7) traversé par un conduit (9) reliant deux circuits de fluide respectivement amont (10) et aval (11), des moyens d'obturation (8) dudit conduit (9), un poussoir (12) coulissant dans une pièce polaire (19) et actionnant lesdits moyens d'obturation (8), un noyau mobile (13) solidaire du poussoir (12) et dont le déplacement est contrôlé par la bobine (3), des moyens de rappel (14) de l'ensemble noyau (13) / poussoir (12) en position ouverte à courant nul et un capuchon (16) de fermeture du sous-ensemble hydraulique (2) définissant avec ladite pièce polaire (19) un espace clos dans lequel peut coulisser l'ensemble noyau (13) / poussoir (12), **caractérisée en ce que** le capuchon (16) comporte un logement (24) traversant le capuchon et débouchant dans l'espace de coulissement de l'ensemble noyau (13) / poussoir (12), dans lequel est enfoncé un organe de réglage (25) dépassant dudit logement (24) de manière à constituer une butée axiale pour l'ensemble noyau (13) / poussoir (12), la distance de dépassement de l'organe de réglage définissant seule la largeur de l'entrefer (e₁+l₀) à courant nul et étant réglable par variation de la force d'enfoncement.

2. Electrovanne de régulation de pression selon la revendication précédente, **caractérisée en ce que** l'organe de réglage est une bille (25).

3. Electrovanne de régulation de pression selon l'une des revendications précédentes, **caractérisée en ce que** les moyens de rappel consistent en un ressort (14) interposé entre le noyau (13) et l'épaulement de fond d'un logement (15) pratiqué, dans la pièce polaire (19), en périphérie de l'alésage permettant le passage du poussoir (12) dans ladite pièce polaire (19).

4. Procédé de réglage à courant nul de l'épaisseur de la distance entre le noyau et une pièce polaire, au cours de l'assemblage d'une électrovanne de régulation de pression selon les revendications précédentes comportant une bille de fermeture interposée entre une extrémité du poussoir et le siège de l'électrovanne, **caractérisé par** les étapes suivantes
introduction de la bille de fermeture dans le corps constitué de la pièce polaire solidarisée au siège, ledit corps étant orienté verticalement de telle sorte que la bille vienne au contact dudit siège par gravité ;
- mesure de la distance d₁ entre le haut de la bille et la face de la pièce polaire prévue pour être en regard du noyau mobile ;
- emmanchement du poussoir dans le noyau jusqu'à ce que la distance entre la face du noyau destinée à venir en regard de la pièce polaire et la zone de contact bille / poussoir soit égale à d₁ + e₁, e₁ étant un entrefer de travail prédéterminé ;
- introduction du ressort dans son logement de l'alésage de la pièce polaire, puis de l'ensemble poussoir / noyau dans ledit alésage ;
- mesure de la distance d₂ entre la surface d'extrémité supérieure du poussoir et un épaulement périphérique externe de la pièce polaire pour le positionnement du capuchon de fermeture sur ladite pièce ;
- enfoncement de l'organe de réglage dans le logement du capuchon jusqu'à ce qu'une distance d₄ mesurée entre le bord du capuchon, ou d'un tube qui lui est fixé, et l'extrémité libre de la bille atteigne une valeur correspondant à la somme de la distance d₂ et d'une levée initiale l₀ prédéterminée ;
- mise en place et soudage du capuchon.

5. Procédé de réglage selon la revendication précédente, **caractérisé en ce que** l'organe de réglage est une bille.

## Claims

1. Pressure-regulating solenoid valve comprising an electrical subassembly (1), provided with a coil (3) and its yoke (4), combined with a hydraulic subassembly (2) comprising a seat (7) through which passes a duct (9) connecting two fluid circuits, an upstream circuit (10) and a downstream circuit (11) respectively, means (8) for shutting off said duct (9), a plunger (12) sliding in a pole piece (19) and actuating said shutoff means (8), a moving core (13) secured to the plunger (12) and whose movement is controlled by the coil (3), means (14) for returning the core (13)/plunger (12) assembly to the open position at zero current, and a closure cap (16) for the hydraulic subassembly (2) that, together with said pole piece (19), defines an enclosed space in which the core (13)/plunger (12) assembly can slide, **characterized in that** the cap (16) comprises a housing (24) passing through the cap and opening into the sliding space for the core (13)/plunger (12) assembly, into which housing is inserted an adjusting member (25) protruding beyond said housing (24) so as to constitute an axial end stop for the core (13)/plunger (12) assembly, the distance by which the adjusting member protrudes alone defining the size of the air gap (e₁₊l₀) at zero current and being adjustable by varying the insertion force.

2. Pressure-regulating solenoid valve according to the preceding claim, **characterized in that** the adjusting member is a ball (25).

3. Pressure-regulating solenoid valve according to either of the preceding claims, **characterized in that** the return means consist of a spring (14) interposed between the core (13) and the bottom shoulder of a housing (15) formed, in the pole piece (19), at the periphery of the bore allowing the plunger (12) to pass in said pole piece (19).

4. Method of adjusting, at zero current, the size of the distance between the core and a pole piece during the assembly of a pressure-regulating solenoid valve according to the preceding claims comprising a closure ball interposed between one end of the plunger and the seat of the solenoid valve, **characterized by** the following steps:
- introducing the closure ball into the body formed by the pole piece secured to the seat, said body being oriented vertically such that the ball comes into contact with said seat by gravity;
- measuring the distance d₁ between the top of the ball and that face of the pole piece intended to be opposite the moving core;
- fitting the plunger into the core until the distance between that face of the core intended to come opposite the pole piece and the ball/plunger contact region is equal to d₁ + e₁, e₁ being a predetermined working air gap;
- introducing the spring into its housing in the bore of the pole piece, then introducing the plunger/core assembly into said bore;
- measuring the distance d₂ between the upper end surface of the plunger and an external peripheral shoulder of the pole piece for the positioning of the closure cap on said piece;
- inserting the adjusting member into the housing of the cap until a distance d₄ measured between the edge of the cap, or of a tube which is fastened to it, and the free end of the ball reaches a value corresponding to the sum of the distance d₂ and of a predetermined initial lift l₀;
- installing and welding the cap.

5. Adjustment method according to the preceding claim, **characterized in that** the adjusting member is a ball.

## Patentansprüche

1. Elektromagnetisches Druckregelventil mit einer elektrischen Unterbaugruppe (1), die mit einer Spule (3) und ihrem Joch (4) versehen ist und die einer hydraulischen Unterbaugruppe (2) zugeordnet ist, die einen Sitz (7), der von einer Leitung (9) durchquert wird, die zwei Fluidkreisläufe, einen stromaufwärtigen (10) und einen stromabwärtigen (11), verbindet, Verschlussmittel (8) für die Leitung (9), einen Schieber (12), der in einem Polstück (19) gleitet und die Verschlussmittel (8) betätigt, einen beweglichen Kern (13), der fest mit dem Schieber (12) verbunden ist und dessen Bewegung durch die Spule (3) gesteuert wird, Mittel (14) zum Zurückholen der aus dem Kern (13) und dem Schieber (12) bestehenden Anordnung in die geöffnete Stellung bei Nullstrom und eine Verschlusskappe (16) für die hydraulische Unterbaugruppe (2), die mit dem Polstück (19) einen geschlossenen Raum definiert, in dem die aus dem Kern (13) und dem Schieber (12) bestehende Anordnung gleiten kann, umfasst,
**dadurch gekennzeichnet, dass**
die Kappe (16) eine Aufnahme (24) aufweist, die die Kappe durchquert und in dem Gleitraum der aus dem Kern (13) und dem Schieber (12) bestehenden Anordnung mündet, in dem ein Einstellglied (25) eingedrückt ist, das über die Aufnahme (24) hinausragt und so einen axialen Anschlag für die aus dem Kern (13) und dem Schieber (12) bestehende Anordnung bildet, wobei die Hinausragungsstrecke des Einstellglieds allein die Breite des Luftspalts l₁ + l₀ bei Nullstrom definiert und durch Ändern der Einpresskraft einstellbar ist.

2. Elektromagnetisches Druckregelventil nach dem vorhergehenden Anspruch, **dadurch gekennzeichnet, dass** das Einstellglied eine Kugel (25) ist.

3. Elektromagnetisches Druckregelventil nach einem der vorhergehenden Ansprüche, **dadurch gekennzeichnet, dass** die Rückholmittel aus einer Feder (14) bestehen, die zwischen dem Kern (13) und der Schulter des Grunds einer in dem Polstück (19) am Umfang der Bohrung, die das Passieren des Schiebers (12) in dem Polstück (19) gestattet, ausgebildeten Aufnahme (15) angeordnet ist.

4. Verfahren zur Einstellung der Breite des Abstands zwischen dem Kern und einem Polstück bei Nullstrom während der Montage eines elektromagnetischen Druckregelventils nach den vorhergehenden Ansprüchen, das eine Schließkugel aufweist, die zwischen einem Ende des Schiebers und dem Sitz des elektromagnetischen Ventils angeordnet ist, **gekennzeichnet durch** die folgenden Schritte:
- Einführen der Schließkugel in den aus dem fest mit dem Sitz verbundenen Polstück bestehenden Körper; wobei der Körper vertikal so ausgerichtet ist, dass die Kugel **durch** Schwerkraft mit dem Sitz in Kontakt kommt;
- Messen des Abstands d₁ zwischen der Oberseite der Kugel und der Fläche des Polstücks, die dem beweglichen Kern gegenüberliegend vorgesehen ist;
- Einpassen des Schiebers in den Kern, bis der Abstand zwischen der Fläche des Kerns, die dem Polstück gegenüberliegen soll, und der Kontaktzone Kugel/Schieber gleich d₁ + eᵢ ist, wobei e₁ ein vorbestimmter Luftarbeitsspalt ist;
- Einführen der Feder in ihre Aufnahme der Bohrung des Polstücks, dann der aus dem Schieber und dem Kern bestehenden Anordnung in die Bohrung;
- Messen des Abstands d₂ zwischen der oberen Endfläche des Schiebers und einer äußeren Umfangsschulter des Polstücks zur Positionierung der Verschlusskappe auf das Stück;
- Einpressen des Einstellglieds in die Aufnahme der Kappe, bis ein Abstand d₄, gemessen zwischen dem Rand der Kappe oder eines Rohrs, das daran befestigt ist, und dem freien Ende der Kugel einen Wert erreicht, der der Summe des Abstands d₂ und eines vorbestimmten Anfangshubs l₀ entspricht;
- Anbringen und Verschweißen der Kappe.

5. Einstellverfahren nach dem vorhergehenden Anspruch, **dadurch gekennzeichnet, dass** das Einstellglied eine Kugel ist.
